# FASCICULE DE BREVET EUROPEEN

(11) **EP 3 630 685 B1**
(45) Date de publication et mention de la délivrance du brevet: **06.04.2022**
(21) Numéro de dépôt: 18724291.2
(22) Date de dépôt: 22.05.2018
(51) Int. Cl.: C02F 3/30, C02F 3/08, C02F 3/12

(54) **PROCÉDÉ DE TRAITEMENT DES EAUX DANS UN SYSTÈME COMPRENANT AU MOINS UN RÉACTEUR SÉQUENTIEL DISCONTINU ET UN RÉACTEUR À FILM BIOLOGIQUE À LIT MOBILE**
WASSERBEHANDLUNGSVERFAHREN IN EINEM SYSTEM, DAS MINDESTENS EINEN SBR UND EINEN SCHWEBEBETTBIOFILMREAKTOR ENTHÄLT
WATER TREATMENT PROCESS IN A SYSTEM COMPRISING AT LEAST A SBR AND A MOVING BED BIOFILM REACTOR

(30) Priorité: 02.06.2017 FR 1754924
(43) Date de publication de la demande: 08.04.2020
(73) Titulaire: Veolia Water Solutions & Technologies Support, 94417 Saint-Maurice Cedex (FR)
(72) Inventeur: LEMAIRE, Romain, 75010 Paris (FR); GERMAIN, Tristan, 31780 CASTELGINEST (FR); LAMARRE, Daniel, Montreal H1X 3M1 (CA)
(74) Mandataire: Vidon Brevets & Stratégie
(86) Numéro de dépôt international: PCT/EP2018/063374
(87) Numéro de publication internationale: WO 2018/219718

(56) Documents cités:
- FR-A1- 2 673 618
- FR-A1- 2 841 548
- FR-A1- 3 020 806
- FR-B1- 2 841 548
- US-A1- 2008 053 897
- US-A1- 2014 238 931
- US-A1- 2016 289 107

## Description

### 1. Domaine de l'invention

L'invention concerne le domaine du traitement des eaux, notamment des eaux usées en vue de leur épuration.

Plus précisément, l'invention concerne un procédé de traitement biologique du carbone, de l'azote et facultativement du phosphore des eaux.

### 2. Art Antérieur

Il est connu de l'art antérieur, un procédé de traitement des eaux usées dans un réacteur séquentiel discontinu à biomasse libre (notamment à boues activées) de type conventionnel. Le terme « réacteur séquentiel discontinu » est également connu dans l'état de la technique par le terme anglais « *sequencing batch reactor* » ou par l'acronyme SBR. Ce procédé est aujourd'hui largement utilisé à travers le monde et est notamment apprécié car il peut être mis en œuvre avec un seul bassin biologique sans besoin d'un ouvrage de clarificateur en aval, contrairement à un procédé à boues activées classique qui, du fait d'une alimentation continue en eaux, nécessite la disposition d'un ouvrage de clarification en aval du bassin biologique et l'instauration d'une recirculation des boues vers le bassin biologique. Ainsi, l'empreinte au sol d'une installation mettant en œuvre un procédé SBR à biomasse libre de type conventionnel est plus faible que celle d'une installation mettant en œuvre un procédé à boues activées classique. En fonction de la quantité d'eaux usées à traiter, plusieurs de ces bassins biologiques peuvent éventuellement être disposés en parallèle.

Un cycle du procédé de traitement biologique des eaux dans un réacteur SBR à biomasse libre de type conventionnel comporte successivement les étapes de :
- remplissage du réacteur avec une eau à traiter ;
- traitement biologique dans le réacteur, consistant en une alternance de conditions anaérobies, anoxiques et aérobies, avec ou sans aération ;
- décantation de la biomasse libre et des matières en suspension ; et,
- clarification/ vidange de l'eau traitée.

Le traitement biologique en conditions aérobies permet la dégradation du carbone ainsi que la transformation de l'ammonium (NH₄⁺) en ions nitrates (NO₃⁻) (nitrification) grâce à une biomasse spécifique nitrifiante. Le traitement biologique en conditions anoxiques permet l'élimination des ions nitrates (NO₃⁻) en diazote gazeux (N₂) (dénitrification) grâce à une biomasse hétérotrophe dénitrifiante. Si nécessaire, l'élimination du phosphore peut se faire soit par voie biologique, soit par voie physico-chimique par ajout de sels métalliques, tels des sels de fers ou d'aluminium. L'élimination du phosphore par voie biologique nécessite une phase avec des conditions anaérobies, pendant laquelle la biomasse appropriée relargue du phosphore et consomme du carbone exogène pour se constituer des réserves internes, et une phase avec des conditions aérobies et/ou anoxiques pendant laquelle la même biomasse sur-accumule une grande partie du phosphore présent dans le milieu réactionnel grâce à ses réserves internes de carbone qui lui fournissent la source d'énergie requise.

FR3020806A1 décrit ainsi un procédé mettant en oeuvre deux réacteurs SBR, l'un fonctionnant en anoxie pour la dénitrification et l'autre en aérobie pour la nitrification.

Des variantes du procédé décrit ci-dessus permettant d'optimiser les performances de traitement sont obtenues en compartimentant le réacteur SBR à boues activées. On parle alors de procédé de traitement dans un réacteur SBR à biomasse libre de type compartimenté. Par exemple, lorsqu'une dénitrification poussée de l'effluent est nécessaire, il est possible d'ajouter en tête du réacteur SBR à biomasse libre un compartiment utilisé en conditions anoxiques et avec agitation. Cette configuration nécessite la mise en place d'une recirculation séquentielle de la liqueur mixte (biomasse libre et effluent) à l'aide d'une pompe entre le compartiment de tête utilisé en conditions anoxiques et l'autre compartiment. La recirculation doit être arrêtée notamment pendant les phases de décantation et de vidange du réacteur SBR à biomasse libre de type compartimenté. Le compartiment utilisé en conditions anoxiques permet d'obtenir une dénitrification biologique de l'eau à traiter plus performante. En effet, l'eau à traiter introduite dans le compartiment de tête est chargée en DCO (Demande Chimique en Oxygène), c'est à dire constitue une source de carbone abondante, ce qui permet de maintenir une forte concentration en bactéries dénitrifiantes. Autre exemple, lorsqu'une dé-phosphatation biologique est nécessaire, il est possible d'utiliser un réacteur SBR à biomasse libre à deux compartiments avec un premier compartiment en conditions anaérobies et un second compartiment en conditions alternativement anoxiques et aérobies ou alors un réacteur SBR à biomasse libre à 3 compartiments avec un premier compartiment en conditions anaérobies, un deuxième compartiment en conditions anoxiques et un troisième compartiment en conditions aérobies. Cette configuration nécessite également la mise en place d'une recirculation séquentielle de la liqueur mixte (biomasse libre et effluent) à l'aide d'une pompe entre le compartiment de tête utilisé en conditions anaérobies et l'(les) autre(s) compartiment(s). De même la recirculation doit être arrêtée notamment pendant les phases de décantation et de vidange du réacteur SBR.

Les procédés de traitement biologique des eaux dans un réacteur SBR à biomasse libre de type conventionnel ou de type compartimenté présentent néanmoins plusieurs inconvénients. Un premier inconvénient est qu'à cause de la faible vitesse de décantation des matières en suspensions (constituées principalement de la biomasse libre épuratrice), ces procédés nécessitent la mise en œuvre de réacteurs ayant un volume important. Un second inconvénient de ces procédés SBR à biomasse libre est qu'ils ont des performances de traitement limitées, en particulier des performances limitées pour la nitrification. En effet, la concentration en boues activées dans le réacteur SBR est souvent limitée, en pratique strictement inférieure à 5 g/L, afin de ne pas altérer l'étape de clarification. Un troisième inconvénient de ces procédés SBR de type conventionnel est qu'il est nécessaire de maintenir un âge de boues élevé dans le réacteur SBR, en pratique un âge de boues strictement supérieur à 15 jours à 12°C, pour pouvoir obtenir un niveau de nitrification suffisant. Ceci implique une augmentation considérable de la taille des installations de traitement des eaux.

Afin de diminuer le volume du réacteur, un procédé de traitement dans un réacteur SBR hybride, appelé réacteur séquentiel discontinu à boues activées et biofilm mobile intégré, a été développé et est notamment décrit dans le document de brevet US 2015321937 A1. Ce type de réacteur est également connu sous le terme anglais « *Integrated fixed film activated sludge-sequencing batch reactor* » ou sous l'acronyme IFAS-SBR. Un réacteur IFAS-SBR est composé de deux compartiments reliés hydrauliquement par une ouverture : le premier compartiment contient une biomasse de bactéries libres en suspension et le second compartiment contient un médium support de bactéries fixées ainsi que de la biomasse libre. L'utilisation des média supports de bactéries fixées dans le second compartiment permet d'obtenir une nitrification plus efficace et donc de réduire la taille de l'installation. Par ailleurs un dispositif de recirculation grâce à une pompe permet de réaliser une recirculation de l'effluent du second compartiment vers le premier compartiment. Lorsqu'un réacteur du type IFAS-SBR est utilisé pour un traitement de type nitrification-dénitrification, le premier compartiment est en conditions anoxiques alors que le deuxième compartiment est en conditions aérobies.

Les procédés de traitement biologique des eaux dans un réacteur IFAS-SBR présentent cependant plusieurs inconvénients. Un premier inconvénient est que le gain de volume par rapport aux réacteurs SBR à biomasse libre de type conventionnel ou compartimenté est limité, en pratique ce gain étant seulement de 20% à 30%, car les média supports de bactéries fixées occupent beaucoup de place lors de la phase de décantation dans le réacteur IFAS-SBR et limitent le volume d'eau pouvant être traité à chaque cycle. Un second inconvénient est que, la réhabilitation d'un réacteur SBR existant de type conventionnel est assez complexe car elle nécessite une vidange du réacteur et la construction d'une nouvelle cloison interne à l'intérieur du réacteur SBR. Cela implique une période d'immobilisation du réacteur SBR de type conventionnel durant la réhabilitation en réacteur IFAS-SBR.

Afin de pallier aux inconvénients liés à l'utilisation d'une biomasse libre dans les réacteurs SBR précédemment décrits, un procédé de traitement biologique dans un réacteur SBR de type conventionnel mais utilisant une biomasse constituée de granules de un à plusieurs millimètres de diamètre, en lieu et place d'une biomasse libre, a été développé et est décrit notamment dans le document de brevet EP1 542 932 B1. Ce procédé permet de traiter biologiquement le carbone, l'azote et facultativement le phosphore sans ajout de sels métalliques pour l'élimination du phosphore. Les granules ayant une densité supérieures aux particules de biomasse libres, leur vitesse de décantation est bien plus élevée que celle des particules de biomasse libre, ce qui permet alors d'obtenir des temps de cycle de fonctionnement du réacteur SBR beaucoup plus courts et donc des tailles d'installations réduites. La concentration en biomasse dans un réacteur SBR à biomasse constituée de granules peut atteindre 8 à 10g/L au lieu de 5 g/L dans un réacteur SBR de type conventionnel à biomasse libre.

Les procédés de traitement dans un réacteur SBR à biomasse constituée de granules présentent cependant l'inconvénient d'être peu fiables, en particulier pour des granules aérobies. Outre la difficulté d'obtenir des conditions favorables à la formation desdites granules, il arrive parfois que ceux-ci soient perdus, soit à la suite d'un problème d'hydraulique dans le réacteur (perte avec les eaux durant les étapes de remplissage/vidange), soit à la suite de déstructuration des granules lors d'un dysfonctionnement du traitement biologique.

Il est également connu de l'art antérieur, notamment de US201628910A1, un procédé de traitement biologique dans un réacteur à film biologique à lit mobile (MBBR) opéré en mode SBR, autrement appelé réacteur séquentiel discontinu à film biologique à lit mobile. Ce type de réacteur est également connu en anglais sous le terme « *sequencing batch moving-bed biofilm reactor* » ou sous l'acronyme SBMBBR. Il permet également de s'affranchir des problèmes liés à l'utilisation d'une biomasse libre décantant trop lentement. Ce procédé à culture fixée sur média allie les avantages du procédé MBBR (résistance aux variations de charges, absence de *bulking,* hétérogénéité physique et biologique de la biomasse, préservation de la biomasse sur les supports) à l'intérêt du phasage temporel des réactions biologiques du cycle d'un réacteur SBR par l'alternance de phases anaérobie(s)/aérobie(s)/anoxique(s). Il peut être utilisé pour le traitement du phosphore en particulier. L'absence de biomasse libre dans le réacteur permet de réaliser une vidange totale ou quasi-totale du liquide contenu dans le réacteur à la fin du cycle SBR et ce sans étape de décantation préalable, contrairement aux réacteurs SBR à biomasse libre ou à biomasse constituée de granules. Le réacteur est muni de grilles perforées qui permettent de retenir les média dans la cuve biologique tout en laissant passer l'eau épurée ainsi que les matières en suspensions durant les phases de vidanges. Cette particularité permet d'obtenir un réacteur SBMBBR très compact. Néanmoins, l'eau traitée vidangée contient des matières en suspensions, de l'ordre de 100 à 500 mg/L, provenant de l'eau à traiter ainsi que du détachement des parties superficielles du biofilm. Les eaux traitées dans un réacteur SBMBBR nécessitent généralement une étape de séparation de ces matières en suspension en aval via un décanteur, un flottateur ou un microfiltre. L'ouvrage utilisé pour cette étape de séparation peut être particulièrement compact du fait des faibles concentrations en MES.

Des tests ont été réalisés dans un réacteur SBMBBR sur une eau usée municipale synthétique ou semi synthétique, en mettant en œuvre des cycles anaérobies/aérobies sans limitation de l'oxygène dissout, autrement dit avec une aération non contrôlée et donc à très fortes concentrations en dioxygène, avec des supports de type KMT et aussi K1 (cf. HELNESS H., « Biological phosphorus removal in a moving bed biofilm reactor», Trondheim, Norwegian University of Science and Technology, 2007, pages 85-96 ; Figure 37). Les résultats de Helness montrent des résultats prometteurs pour le traitement du carbone, de l'azote et du phosphore des eaux testées. Cependant, les tests ont eu lieu avec une eau municipale faiblement concentrée en NH₄ et PO₄, dopée en acétate (favorable au traitement biologique du phosphore car il s'agit d'un carbone organique facilement utilisable par les bactéries déphosphatantes) et ayant un ratio DCO:NTK (Demande Chimique en Oxygène:Azote Total Kjeldhal) avantageux pour le traitement de l'azote (Ratio DCO:NTK supérieur ou égal 10). Par ailleurs, les résultats de profils de concentrations au cours d'un cycle de traitement montrent un décalage dans le temps entre l'assimilation biologique du phosphore et la nitrification. En effet, l'étape limitante est la nitrification qui nécessite de continuer l'aération pendant 75 min alors que le Phosphore (PO₄) est déjà consommé. Les inventeurs de la présente invention ont renouvelé ces tests sur un réacteur SBMBBR traitant une eau municipale réelle, plus concentrée en azote que celle testée par Helness, sans apport exogène de matière organique et avec un ratio DCO:NTK compris entre 5 et 8 (et donc moins favorable pour le traitement global de l'azote). Ils ont alors pu confirmer ce décalage entre le temps nécessaire pour sur-accumuler le phosphore et pour finir la nitrification lors de l'étape d'aération du réacteur SBMBBR. Ainsi les procédés de traitements biologiques du carbone, de l'azote et du phosphore des eaux dans un réacteur séquentiel discontinu à film biologique à lit mobile présentent comme inconvénient d'avoir une étape d'aération particulièrement longue, ce qui entraîne une surconsommation de dioxygène et donc une surconsommation énergétique de l'installation correspondante et, ce qui entraîne également un allongement du cycle de traitement de l'eau et donc un surdimensionnement nécessaire de l'installation correspondante.

### 3. Objectifs de l'invention

La présente invention a pour objectif de pallier au moins certains des inconvénients de l'art antérieur cité.

Un objectif de l'invention est notamment de proposer un procédé de traitement biologique amélioré du carbone, de l'azote et facultativement du phosphore contenus dans l'eau, notamment en ce qui concerne la nitrification.

Un autre objectif de l'invention est de proposer un procédé de traitement biologique amélioré du carbone et de l'azote et facultativement du phosphore contenus dans l'eau qui soit flexible, stable et robuste.

Un autre objectif de l'invention est, au moins selon certains modes de réalisation de l'invention, de proposer un procédé énergétiquement compétitif.

### 4. Exposé de l'invention

L'invention concerne un procédé de traitement biologique du carbone, de l'azote et facultativement du phosphore des eaux, dans un système de réacteurs comprenant au moins deux réacteurs séquentiels discontinus (SBR) parallèes et un réacteur à film biologique à lit mobile (MBBR). Le procédé comprend les étapes de :
- remplissage d'un réacteur séquentiel discontinu avec une eau à traiter ;
- traitement biologique anoxique/aérobie dans le système de réacteurs de l'eau présente dans ledit réacteur séquentiel discontinu ; et,
- évacuation dudit réacteur séquentiel discontinu d'une eau traitée ;

L'étape de traitement biologique anoxique/aérobie dans le système de réacteurs comprend :
- un traitement biologique en conditions majoritairement anoxiques par une première biomasse dans lesdits au moins deux réacteurs séquentiels discontinus, produisant un premier effluent, la première biomasse comprenant principalement des micro-organismes hétérotrophes à effet dénitrifiant ;
- un traitement biologique en conditions aérobies par une seconde biomasse dans le réacteur à film biologique à lit mobile, produisant un second effluent, la seconde biomasse comprenant un biofilm à effet majoritairement nitrifiant supporté sur média ; et,
- une recirculation continue des premier et second effluents entre lesdis au moins deux réacteurs séquentiels discontinus et le réacteur à film biologique à lit mobile,
ladite étape de traitement biologique anoxique/aérobie ayant lieu tour à tour entre ledit réacteur à film biologique à lit mobile et chacun desdits au moins deux réacteurs séquentiels discontinus (SBR) parallèles de manière séquentielle, permettant de faire fonctionner ledit réacteur à film biologique à lit mobile (MBBR) globalement en continu et uniquement en aérobie.

Selon l'invention, le système de réacteurs comprend au moins deux réacteurs séquentiels discontinus disposés en parallèle. On entend par « disposés en parallèle » le fait que l'eau à traiter entrant dans chacun desdits au moins deux réacteurs séquentiels discontinus puisse être issue d'un même flux d'eau à traiter et le fait que l'eau traitée sortant de chacun desdits au moins deux réacteurs séquentiels discontinus puisse être recombinée en un même flux d'eau traitée.

On entend par conditions « aérobies », la présence de dioxygène dans un milieu réactionnel. La concentration en dioxygène dissout est alors généralement supérieure ou égale à 1 mg/L.

On entend par conditions « anaérobies», l'absence totale ou quasi-totale de dioxygène dans un milieu réactionnel réducteur, c'est à dire ne comprenant notamment pas de formes oxydées de composés azotés, comme des ions nitrates (NO₃⁻) ou nitrites (NO₂⁻) par exemple. La concentration en dioxygène dissout est alors proche de 0 mg/L.

On entend par conditions « anoxiques », l'absence totale ou quasi-totale de dioxygène dissout dans un milieu réactionnel oxydant, c'est à dire comprenant des formes oxydées de composés azotés, comme des ions nitrates (NO₃⁻) ou nitrites (NO₂⁻) par exemple. La concentration en dioxygène dissout est alors proche de 0 mg/L.

On entend par traitement biologique en conditions « majoritairement » anoxiques, le fait que le milieu réactionnel soit en conditions totalement anoxiques pendant plus de 50%, ou plus de 60%, ou plus de 70%, ou plus de 80%, ou plus de 90%, ou plus de 95% de la durée totale dudit traitement. En effet, il peut exister des périodes transitoires, provoquées ou non, où le milieu réactionnel peut être en conditions aérobies et/ou anaérobies. De manière préférentielle, le milieu réactionnel du traitement biologique en conditions majoritairement anoxiques est en conditions totalement anoxiques pendant plus de 90% de la durée totale dudit traitement. De manière extrêmement préférentielle, le milieu réactionnel du traitement biologique en conditions majoritairement anoxiques est en conditions totalement anoxiques pendant plus de 95% de la durée totale dudit traitement.

On entend par « principalement » des micro-organismes hétérotrophes à effet dénitrifiant , le fait que la première biomasse est composée d'un ensemble de micro-organismes, parmi lesquels plus de 50%, ou plus de 60% ou plus de 70%, ou plus de 80%, ou plus de 90% sont des micro-organismes hétérotrophes à effet dénitrifiant.

De même, on entend par « majoritairement » nitrifiant, le fait que la seconde biomasse comporte principalement des micro-organismes capables de nitrification.

On entend par « effluent » la fraction liquide de l'eau en cours de traitement biologique pouvant être recirculée depuis un réacteur vers un autre réacteur comprenant des particules en suspension, dont, le cas échéant de la biomasse libre.

Dans la description ci après, le terme « réacteur séquentiel discontinu » pourra apparaître sous son acronyme « SBR » et le terme « réacteur à film biologique à lit mobile » sous son acronyme « MBBR ».

La présente invention repose donc sur la mise en parallèle d'un réacteur MBBR avec plusieurs réacteurs SBR. Le réacteur MBBR , utilisé seulement pendant l'étape de traitement biologique anoxique/aérobie, est utilisé uniquement en conditions aérobies permettant un développement optimal des micro-organismes du biofilm à effet nitrifiant. Ainsi, la nitrification des eaux en cours de traitement a principalement lieu dans le réacteur MBBR. Chaque réacteur SBR, utilisé majoritairement en conditions anoxiques pendant l'étape de traitement biologique anoxique/aérobie permet un développement optimal des micro-organismes hétérotrophes à effet dénitrifiant. La recirculation continue des premier et second effluents permet d'assurer une alternance continue de conditions anoxiques et de conditions aérobies pour les eaux en cours de traitement. Le procédé selon l'invention permet ainsi de traiter biologiquement de façon efficace, et de manière énergétiquement compétitive, le carbone, l'azote et facultativement le phosphore dans des eaux. Les installations mettant en œuvre ce procédé peuvent donc être très compactes.

L'étape de remplissage de chacun desdits au moins deux réacteurs séquentiels discontinus avec une eau à traiter peut être effectuée plus ou moins rapidement. La durée de remplissage peut notamment être comprise entre 10 minutes et 4 heures.

L'étape de remplissage est avantageusement effectuée en conditions anaérobies. Ceci permet notamment d'initier les mécanismes de déphosphatation biologique grâce à la présence dans la première biomasse de micro-organismes capables d'accumuler des polyphosphates. Ces micro-organismes sont également connus en anglais sous le terme « polyphosphate accumulative organisms » ou sous l'acronyme PAO. Une dégradation ou réduction du carbone organique soluble de l'eau présente dans chaque réacteur SBR et une augmentation de phosphore inorganique est observée, le relargage de phospore inorganique par les micro-organismes PAO étant une étape essentielle pour la déphosphatation. Selon un mode de réalisation particulier, le procédé selon l'invention comprend en outre une étape de traitement biologique en conditions anaérobies dans lesdits au moins deux réacteurs séquentiels discontinus. Cette étape complémentaire de traitement biologique en conditions anaérobies est alors mise en œuvre avant ladite étape de traitement biologique anoxique/aérobie. Elle peut durer de 10 minutes à 3 heures. Ce mode de réalisation est en particulier intéressant dans le cas où l'étape de remplissage est réalisée rapidement, c'est à dire pendant une durée de l'ordre de quelques dizaines de minutes, et /ou dans le cas où une dephosphatation poussée de l'eau à traiter est nécessaire. Cette étape complémentaire permet une initiation accrue des mécanismes de déphosphatation biologique grâce à la présence dans la première biomasse de micro-organismes capables d'accumuler des polyphosphates. Cette étape complémentaire permet également de réduire la quantité de carbone exogène et donc le ratio C :N de l'eau.

De manière préférentielle, la première biomasse comprend des micro-organismes dénitrifiants capables d'accumuler des polyphosphates. Ces micro-organismes sont des PAO capables d'accumuler des polyphosphates en utilisant des ions nitrates ou des ions nitrites plutôt que du dioxygène, leur source d'énergie provenant des réserves de carbone internes constituées durant l'étape anaérobie précédente. Ils sont également connus en anglais sous le terme « denitrifying *polyphosphate accumulative organism* » ou sous l'acronyme DPAO. Ceci a notamment pour avantage de permettre d'avoir un procédé dans lequel la déphosphatation et la nitrification sont découplées et dans lequel, au contraire, la déphosphatation et la dénitrification sont couplées.

L'étape de traitement biologique anoxique/aérobie est mise en œuvre par recirculation continue des premier et second effluents entre les au moins deux réacteurs séquentiels discontinus et le réacteur à film biologique à lit mobile. La recirculation permet notamment d'assurer une alternance continue de conditions anoxiques et de conditions aérobies pour l'eau en cours de traitement. L'étape de traitement biologique anoxique/aérobie peut avoir une durée comprise entre 1 heure et 8 heures.

Le traitement biologique en conditions majoritairement anoxiques par la première biomasse de chaque réacteur SBR, pendant l'étape de traitement biologique anoxique/aérobie, permet d'assurer la dénitrification de l'eau en cours de traitement par transformation des ions nitrates (NO₃⁻) en diazote (N₂), et facultativement la déphosphatation de l'eau en cours de traitement par accumulation dans des bactéries des polyphosphates. La dénitrification est assurée par des micro-organismes hétérotrophes à effet dénitrifiant issus de la première biomasse. La déphosphatation, le cas échéant, est assurée par des micro-organismes PAO, préférentiellement des micro-organismes DPAO.

La première biomasse peut être une biomasse libre, une biomasse granulaire ou un biofilm supporté sur média.

Selon un premier mode de réalisation, la première biomasse est une biomasse libre. Dans ce mode de réalisation le premier effluent comprend des particules en suspensions incluant des éléments de biomasse libre en suspension.

Selon un second mode de réalisation, la première biomasse est un biofilm supporté sur média. Dans ce mode de réalisation le premier effluent comprend des particules en suspension mais pas de biofilm supporté sur média. Ce mode de réalisation est particulièrement préféré du fait des nombreux avantages techniques procurés par rapport à une biomasse libre. Le biofilm supporté sur média permet notamment d'obtenir une concentration plus élevée de biomasse : une dénitrification poussée peut donc être mise en œuvre avec des installations pouvant être plus compactes. Un biofilm supporté sur média permet une sélection accrue des micro-organismes d'intérêt, en l'occurrence principalement des micro-organismes hétérotrophes à effet dénitrifiant et dans certains cas également des micro-organismes PAO ou DPAO. Le biofilm permet aussi d'obtenir facilement un âge de boues plus élevé que pour un procédé à boues activées permettant aux micro-organismes hétérotophes à effet dénitrifiant, voire aux micro-organismes PAO ou DPAO, de mieux se développer. Le biofilm a une meilleure réponse aux variations en DCO et une meilleure résistance à d'éventuels chocs toxiques.

Le traitement biologique en conditions aérobies par la seconde biomasse du réacteur MBBR, pendant l'étape de traitement biologique anoxique/aérobie, permet d'assurer la nitrification par transformation de l'ammonium(NH4⁺) en ion nitrates (NO3⁻). Le réacteur MBBR étant utilisé uniquement en conditions aérobies dans le procédé selon l'invention, les micro-organismes du biofilm à effet nitrifiant peuvent avoir un développement optimal et donc des performances accrues.

Le développement des micro-organismes et leurs performances sont d'autant meilleurs que le ratio C :N est faible. La seconde biomasse comprend un biofilm à effet nitrifiant. Le biofilm à effet nitrifiant est un ensemble de micro-organismes adhérents entre eux et adhérents à la surface de média supports. Le biofilm supporté sur média procure de nombreux avantages par rapport à une biomasse libre. Un biofilm supporté sur média permet notamment d'obtenir une concentration plus élevée de biomasse : une nitrification poussée peut donc être mise en œuvre avec des installations pouvant être plus compactes. Un biofilm supporté sur média permet une sélection accrue des micro-organismes d'intérêt, en l'occurrence des micro-organismes à effet nitrifiant. Le biofilm permet aussi d'obtenir facilement un âge de boues plus élevé que pour un procédé à boues activées permettant aux micro-organismes à effet nitrifiant de mieux se développer. Le biofilm a une meilleure réponse aux variations en DCO et une meilleure résistance à d'éventuels chocs toxiques.

Dans le premier mode de réalisation selon lequel la première biomasse est une biomasse libre, le second effluent comprend des matières en suspensions incluant des éléments de biomasse libre en suspension issus de la première biomasse. Dans le second mode de réalisation selon lequel la première biomasse est un biofilm supporté sur média, le second effluent comprend des matières en suspensions, mais pas du biofilm supporté sur média issu de la première biomasse.

De manière préférentielle, la concentration en dioxygène dissout dans ledit second effluent est comprise entre 1 milligramme et 6 milligrammes par litre. La concentration en dioxygène n'a généralement pas besoin d'être supérieure puisque que la nitrification est optimisée par l'utilisation de biofilm à effet nitrifiant pour la deuxième biomasse et que la déphosphatation, le cas échéant, a principalement lieu dans chaque réacteur SBR en conditions anoxiques.

Selon l'invention, le système de réacteurs comprend au moins deux réacteurs séquentiels discontinus disposés en parallèle.

Le système de réacteurs peut ainsi notamment comprendre 2 , 3, 4 ou 5 réacteurs séquentiels discontinus.

L'étape de traitement biologique anoxique/aérobie est mise en œuvre avec chacun desdits au moins deux réacteurs séquentiels discontinus de manière séquentielle. C'est à dire que l'étape de traitement biologique anoxie/aérobie a lieu tour à tour entre le réacteur MBBR et chacun desdits au moins deux réacteurs SBR. Ceci permet d'utiliser un seul réacteur MBBR à effet nitrifiant avec un ensemble de réacteurs SBR en parallèle. Le réacteur MBBR a alors un fonctionnement globalement continu.

Il est également décrit une installation pour le traitement biologique du carbone, de l'azote et facultativement du phosphore d'une eau à traiter, comprenant un réacteur à film biologique à lit mobile (MBBR) et au moins deux réacteurs séquentiels discontinus (SBR) pour la mise en œuvre du procédé selon l'invention

Chaque réacteur séquentiel discontinu comprend des moyens d'amenée de l'eau à traiter, des moyens d'évacuation d'une eau traitée et des moyens de recirculation d'un premier effluent provenant du réacteur séquentiel discontinu vers le réacteur à film biologique à lit mobile. Le réacteur à film biologique à lit mobile comprend des moyens d'aération des moyens de recirculation d'un second effluent provenant du réacteur à film biologique à lit mobile vers chaque réacteur séquentiel discontinu.

Chaque réacteur séquentiel discontinu comprend également des moyens d'agitation. Chaque réacteur séquentiel discontinu peut aussi comprendre des moyens d'aération.

Le réacteur à film biologique à lit mobile peut comprendre des moyens d'agitation supplémentaires en plus des moyens d'aération déjà présents. Ces moyens d'agitation sont généralement optionnels étant donné que le réacteur à film biologique à lit mobile est destiné à fonctionner exclusivement en mode aérobie et est donc destiné a être aéré en continu, ce qui induit une agitation suffisante. Chaque réacteur séquentiel discontinu est un réacteur séquentiel discontinu à biomasse libre ou granulaire ou un réacteur séquentiel discontinu à film biologique à lit mobile. Chaque réacteur séquentiel discontinu est avantageusement un réacteur séquentiel discontinu à film biologique à lit mobile (SBMBBR).

Le réacteur à film biologique à lit mobile comporte une grille perforée permettant de retenir des médias supports de film biologique. Dans le cas où les réacteurs séquentiels discontinus sont des réacteurs séquentiels discontinus à film biologique à lit mobile, ils peuvent également comporter une grille perforée permettant de retenir des médias supports de film biologique.

Une telle installation peut comprendre 2 , 3, 4 ou 5 réacteurs séquentiels discontinus disposés en parallèle.

### 5. Liste des figures

L'invention, ainsi que les différents avantages qu'elle présente, seront plus facilement compris grâce à la description qui va suivre d'un mode non-limitatif de réalisation de celle-ci, donnée en référence aux dessins, dans lesquels :
La figure 1 représente un système de réacteurs selon la présente invention comprenant un réacteur MBBR et trois réacteurs SBMBBR disposés en parallèle.
La figure 2A représente les étapes du procédé selon la présente invention dans le système de réacteurs selon la figure 1.
La figure 2B détaille l'étape de traitement biologique anoxique/aérobie dans le système de réacteurs selon la figure 1.
La figure 3 représente les étapes du procédé selon la présente invention comprenant en outre des étapes complémentaires de traitement(s) biologique(s).
La figure 4 représente un phasage temporel particulièrement approprié pour les différentes étapes du procédé selon la figure 3 pour chacun des réacteurs du système de réacteurs de la figure 1.

### 6. Description de modes détaillés de réalisation de l'invention

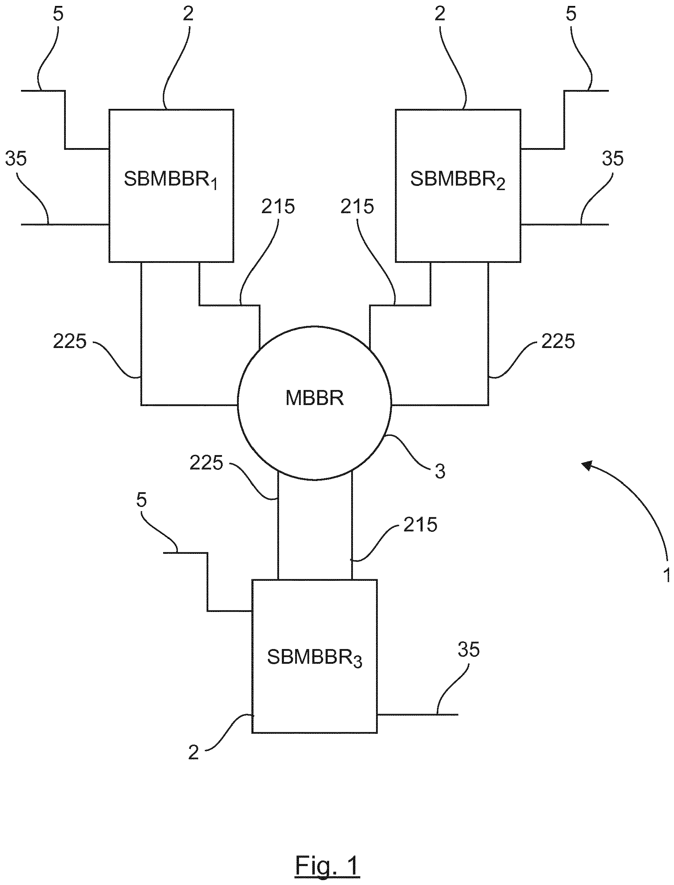

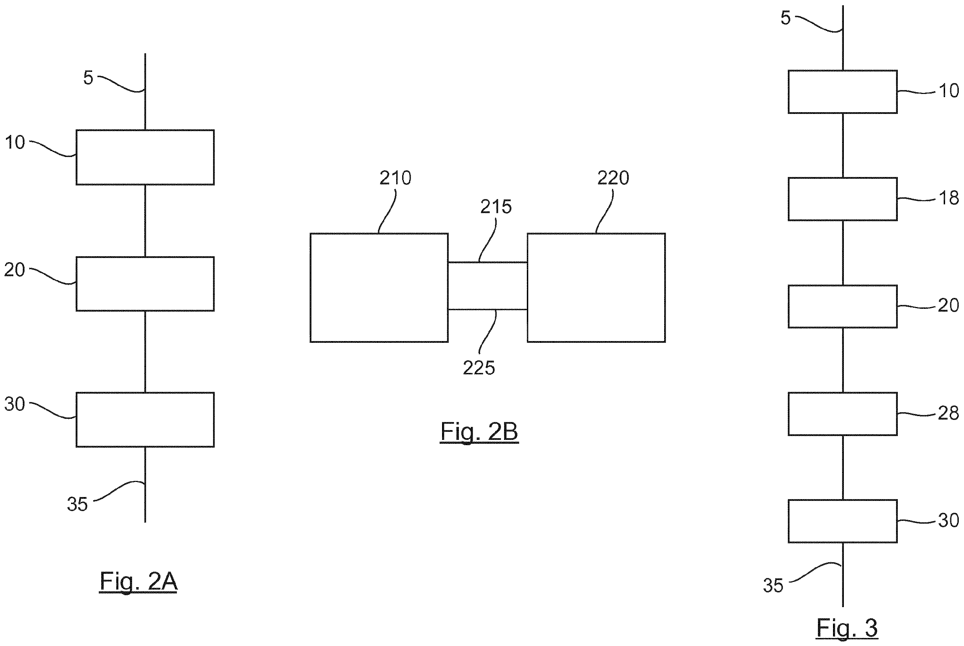

En référence à la figure 1, le système de réacteurs 1 comprend trois réacteurs séquentiels discontinus à film biologique à lit mobile 2, SBMBBR₁, SBMBBR₂ et SBMBBR₃ et un réacteur à film biologique à lit mobile 3, MBBR . En référence aux figures 2A et 2B, le procédé de traitement biologique du carbone, de l'azote et facultativement du phosphore des eaux, dans le système de réacteurs 1 comprend les étapes de :
- remplissage 10 de chacun des trois réacteurs séquentiels discontinus à film biologique à lit mobile 2 avec une eau à traiter 5 ;
- traitement biologique anoxique/aérobie 20 dans le système de réacteurs 1 de l'eau présente dans les trois réacteurs séquentiels discontinus à film biologique à lit mobile 2 ; et,
- évacuation 30 de chacun des trois réacteurs séquentiels discontinus à film biologique à lit mobile 2 d'une eau traitée 35 ;

L'étape de traitement biologique anoxique/aérobie 20 dans le réacteur MBBR 3 et l'un des réacteurs SBMBBR 2, par exemple SBMBBR₁, comprend :
- un traitement biologique 210 en conditions majoritairement anoxiques par une première biomasse fixée sur média dans le réacteur SBMBBR₁ 2, produisant un premier effluent 215, la première biomasse comprenant des micro-organismes hétérotrophes à effet dénitrifiant ;
- un traitement biologique 220 en conditions aérobies par une seconde biomasse dans le réacteur MBBR 3, produisant un second effluent 225, la seconde biomasse comprenant un biofilm à effet nitrifiant supporté sur média ; et,
- une recirculation continue du premier effluent 215 vers le réacteur MBBR 3 et du second effluent 225 vers le réacteur SBMBBR₁ 2.

L'étape de traitement biologique anoxique/aérobie 20 a également lieu d'une part dans le réacteur MBBR 3 et le réacteur SBMBBR₂ 2 et d'autre part dans le réacteur MBBR 3 et le réacteur SBMBBR₃.

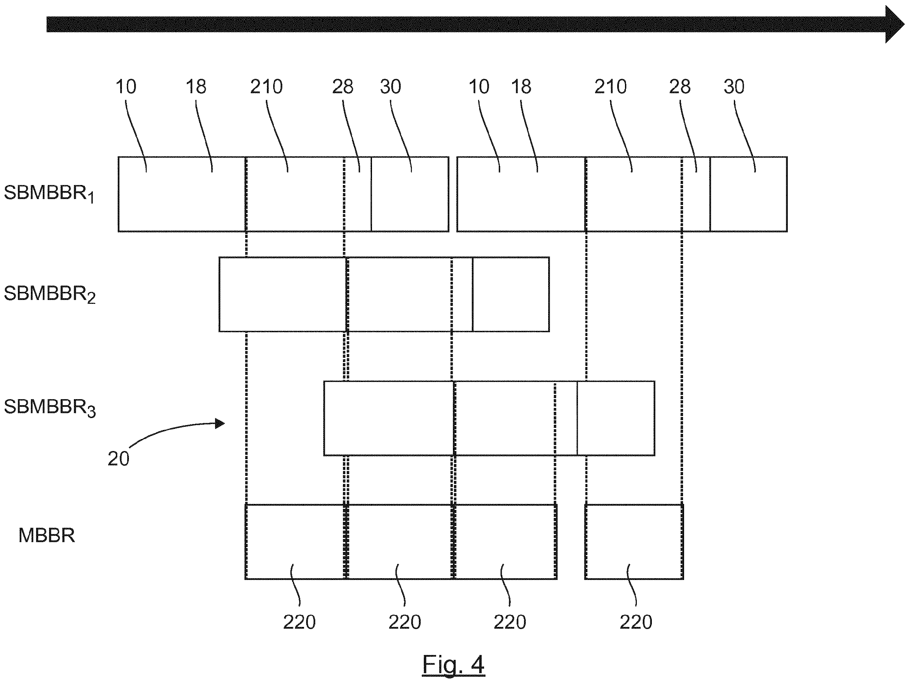

Un mode particulier où le traitement biologique est mis en oeuvre de manière séquentielle est présenté ci-après en référence à la figure 4.

Les réacteurs SBMBBR 2 (SBMBBR₁, SBMBBR₂, SBMBBR₃) sont initialement vides d'eau.

L'étape de remplissage 10 peut être réalisée via un piquage en point bas des réacteurs SBMBBR 2 ou par un système de siphon en position centrale basse des réacteurs SBMBBR 2 jusqu'à atteindre le niveau haut de remplissage. L'étape de remplissage 10 peut être mise en œuvre de manière simultannée ou bien de manière séquentielle dans les trois réacteurs SBMBBR 2. Pour chaque réacteur SBMBBR 2, par exemple le réacteur SBMBBR₁, une agitation mécanique peut être activée dès que l'ensemble des média de la première biomasse a été suffisamment immergé, pour favoriser le brassage. Des mécanismes de déphosphatation biologique peuvent alors débuter grâce à la présence de bactéries PAO, préférentiellement DPAO, présentes sur les média de la première biomasse. Une dégradation ou réduction du carbone organique soluble présent dans l'eau en cours de traitement est observée ainsi qu'un relargage de phosphore inorganique soluble. L'étape de remplissage 10 peut être rapide, durer de l'ordre de quelques (dizaine de) minutes, ou lent, durer jusqu'à 4 heures.

Dans le cas où l'étape de remplissage 10 a été rapide et en fonction des caractéristiques de l'eau à traiter pour chaque réacteur SBMBBR 2, en référence à la figure 3, le procédé peut comprendre en outre une étape de traitement biologique en conditions anaérobies 18 dans les réacteurs SBMBBR 2 après la fin de l'étape de remplissage 10 des réacteurs SBMBBR 2. Ce traitement complémentaire est mis en œuvre en conditions anaérobies et avec agitation. Il permet une activation accrue des mécanismes de déphosphatation biologique. Il peut être mis en œuvre pendant quelques dizaines de minutes jusqu'à 3 heures en fonction des caractéristiques de l'eau à traiter 5.

L'étape de traitement biologique anoxique/aérobie 20 repose sur le fonctionnement des réacteurs SBMBBR 2 en conditions majoritairement anoxiques, sur le fonctionnement du réacteur MBBR 3 en conditions aérobies et sur la recirculation continue de chacun des premiers effluents 215 des réacteurs SBMBBR 2 avec l'effluent 225 du réacteur MBBR 3. Dans le cas présent, les premiers effluents 215 comprennent la fraction liquide de l'eau en cours de traitement biologique en conditions anoxiques dans les réacteurs SBMBBR 2 et comprend généralement des particules de matière en suspension mais ne contient pas les médias support de la première biomasse. De même, le second effluent 225 comprend la fraction liquide de l'eau en cours de traitement biologique dans le réacteur MBBR 3 et comprend généralement des particules de matière en suspension mais ne contient pas les médias support de la seconde biomasse. Les média supports de la première biomasse et de la seconde biomasse peuvent facilement être retenus à l'intérieur de leurs réacteurs respectifs 2, 3 lors de la recirculation continue des effluents 215 et 225 grâce à des grilles perforées disposées dans chacun des réacteurs 2, 3. Le diamètre des trous des grilles perforées permet de laisser passer la fraction liquide des effluents 215, 225 ainsi que les matières en suspensions mais retient les média supports de biomasse. L'étape de traitement biologique anoxique/aérobie 20 dans SBMBBR₁ 2 et MBBR 3, SBMBBR₂ 2 et MBBR 3 et, SBMBBR3 2 et MBBR 3 peut être mise en œuvre de manière séquentielle dans les trois réacteurs SBMBBR 2. La durée totale de l'étape de traitement biologique anoxique/aérobie 20 entre l'un des réacteurs SBMBBR 2, par exemple SBMBBR₁, et le réacteur MBBR 3, est variable et peut être ajustée en fonction des caractéristiques de l'eau à traiter 5 ou de l'eau en cours de traitement et, de la nature de la première biomasse et de la deuxième biomasse. Elle pourra durer généralement de 1 heure et 8 heures.

Le traitement biologique 210 en conditions majoritairement anoxiques dans les réacteurs SBMBBR 2 permet de réaliser une dénitrification. Les nitrates alors présents dans l'eau en cours de traitement dans les réacteurs SBMBBR 2 sont transformés en diazote grâce aux bactéries dénitrifiantes composant au moins en partie la première biomasse. Le cas échéant, c'est également ce traitement biologique qui assure majoritairement une déphosphatation biologique. Le phosphore/les ions phosphates sont absorbés par suraccumulation par les micro-organismes PAO, en particulier des micro-organismes DPAO, composant au moins en partie la première biomasse. Une élimination du carbone soluble est également observée. Au cours du traitement biologique 210 en conditions majoritairement anoxiques, les réacteurs SBMBBR 2 peuvent être brassés à l'aide d'un agitateur mécanique. Une aération peut également être activée temporairement au cours de traitement afin de garantir un affinage du traitement du phosphore.

Le traitement biologique 220 en conditions aérobies dans le réacteur MBBR 3, permet de réaliser une nitrification. La concentration en oxygène pourra être comprise entre 1 et 6 mg/L dans le réacteur MBBR 3 en fonction des caractéristiques de l'eau à traiter et de la nature de la deuxième biomasse.

Une fois l'étape de traitement biologique anoxique/aérobie 20 achevée, l'eau traitée par traitement biologique anoxique/aérobie 20 est rassemblée dans les réacteurs SBMBBR 2.

En référence à la figure 3, une étape de traitement biologique d'affinage 28 dans les réacteurs SBMBBR 2 peut parfois être nécessaire après l'étape de traitement biologique anoxique/aérobie 20. Cette étape complémentaire permet de finaliser la dénitrification et/ou la déphosphatation dans les réacteurs SBMBBR 2. Elle a généralement lieu en conditions anoxiques et/ou aérobie. Une aération peut également être activée, notamment pour garantir l'affinage du traitement du phosphore.

L'agitation mécanique, si existante, des réacteurs SBMBBR 2 est arrêtée. L'étape de vidange 30 dans les réacteurs SBMBBR 2, est mise en œuvre par gravité ou pompage en point bas du réacteur ou encore grâce à un système de siphon en position centrale basse des réacteurs. Les médias support de la première biomasse sont alors maintenus dans les réacteurs SBMBBR 2 grâce à la mise en place de grilles perforées dont le diamètre des trous permet l'évacuation des eaux traitées 35 tout en empêchant le passage des médias supports.

Une étape complémentaire de clarification (non représentée) des eaux traitées 35, vidangées, peut suivre l'étape de vidange 30. L'ouvrage pour l'étape complémentaire de clarification est néanmoins très compact du fait des faibles concentrations en matières en suspension (MES).

En référence à la figure 4, les trois réacteurs SBMBBR 2 sont utilisés avec le procédé selon la figure 3. L'étape de traitement biologique 20 est mise en oeuvre de manière séquentielle entre le réacteur MBBR 3 et tour à tour les réacteurs SBMBBR₁, SBMBBR₂ et SBMBBR₃. Les réacteurs SBMBBR 2, par exemple SBMBBR₁, sont placés en conditions anaérobies lors de l'étape de remplissage 10 et de l'étape de traitement biologique en conditions anaérobies 18. Les réacteurs SBMBBR 2, par exemple SBMBBR₁, sont ensuite placés en conditions anoxiques pendant l'étape de traitement biologique anoxique/aérobie 20 (traitement biologique en conditions anoxiques 210) puis pendant l'étape de traitement biologique d'affinage 28. Le début et la fin de la recirculation continue des effluents 215 , 225 entre les réacteurs SBMBBR 2 et le réacteur MBBR 3 est indiquée par des pointillés. Enfin l'étape d'évacuation 30 permet de récupérer une eau traitée 35. Les étapes du procédé sont déphasées pour les réacteurs SBMBBR₁, SBMBBR₂ et SBMBBR₃ de telle sorte que l'étape de traitement biologique anoxique/aérobie (20) soit mise en œuvre alternativement et successivement dans le réacteur SBMBBR₁ 2 et MBBR 3, SBMBBR₂ 2 et MBBR 3 et, SBMBBR₃ 2 et MBBR 3. Le réacteur MBBR 3 fonctionne alors de manière globalement continue et uniquement en conditions aérobies. Le réacteur MBBR 3 assure ainsi de manière optimale une nitrification optimisée pour les eaux à traiter des réacteurs SBMBBR₁, SBMBBR₂ et SBMBBR₃.

Les caractéristiques de l'eau à traiter 5 ou de l'eau en cours de traitement peuvent notamment être mesurées par un certain nombre d'indicateurs (les normes de mesure françaises sont indiquées entre parenthèses) : la demande chimique en oxygène (DCO - NF T 90-101), la demande biochimique en oxygène (DBO - NF EN 1899-1), les matières en suspension (MES - NF T90-105(2), NF EN 872), l'azote Kjeldahl, correspondant à la somme de l'azote sous forme ammoniacale et organique (NF EN 25663), la quantité d'ammonium (NF T 90-015), la quantité d'ions nitrates (NF T 90-045), la quantité de phosphore (NF EN ISO 6878). Afin d'optimiser les performances lors de chaque étapes du procédé, les différents réacteurs 2, 3 peuvent être équipés de capteurs et ou sondes spécifiques, notamment pour mesurer le potentiel Redox, la concentration en dioxygène, la concentration en nitrates, la concentration en ammonium et la concentration en phosphates.

Dans le mode de réalisation ci-dessus décrit, la première biomasse et la seconde biomasse sont toutes deux supportées sur des médias. Ces médias ont une forme et des caractéristiques de surface spécifiquement choisies pour permettre une bonne adhésion de la première biomasse, respectivement de la deuxième biomasse, auxdits média supports. Ils sont fabriqués en matériaux synthétiques et ont une densité proche de celle de l'eau, comprise préférentiellement entre 0.9 et 1.1. C'est un mode de réalisation préféré de l'invention puisque la biomasse supportée sur média permet d'obtenir notamment des biofilms robustes, résistants aux variations de charge, avec une sélection accrue des micro-organismes d'intérêt, et se développe en forte concentration de micro-organismes. Le procédé obtenu est donc en conséquence flexible aux variations de charge, stable et robuste. L'installation correspondante est donc très compacte. Il permet notamment d'obtenir un procédé énergétiquement compétitif et adapté au traitement simultané du carbone, de l'azote et du phosphore étant donné que la nitrification peut ainsi être optimisée et que la déphosphatation peut être principalement couplée avec la dénitrification.

Alternativement au mode de réalisation ci-dessus décrit, la première biomasse peut être une biomasse libre de type boues activées ou granulaire. Dans ce cas, les réacteurs SBR 2 ne sont pas des réacteurs de type SBMBBR mais des réacteurs de type SBR à biomasse libre. Bien que cela ne soit pas un mode de réalisation préféré, l'installation correspondante étant à priori moins énergétiquement compétitive et moins compacte, ce mode de réalisation est envisageable, en particulier dans les cas de réhabilitation d'installations déjà existantes. Certaines différences à prendre en compte sont notamment le fait que la première biomasse de type biomasse libre ou granulaire est présente à la fois dans les réacteurs SBR 2 à biomasse libre ou granulaire et dans le réacteur MBBR 3 pendant l'étape de traitement biologique anoxique/aérobie 20. La première biomasse de type biomasse libre ou granulaire est moins robuste, moins résistante aux variations de charge, avec une sélection moins importante des micro-organismes d'intérêt puisqu'elle se trouve alternativement en conditions aérobies et anoxiques et se développe en concentration plus faible de micro-organismes. De plus une étape de décantation avant l'étape de vidange 30, plus ou moins longue dépendant de la vitesse de décantation de la première biomasse de type biomasse libre ou granulaire, doit être réalisée. L'étape de vidange 30 peut être mise en œuvre par pelles. Dans ce mode de réalisation alternatif, la deuxième biomasse est un biofilm sur média restant en permanence dans le réacteur MBBR 3, permettant ainsi d'obtenir une nitrification optimisée et donc des installations de volume moindre par rapport à l'art antérieur.

### 7. Conclusions sur les avantages procurés par l'invention par rapport aux techniques de l'art antérieur

En comparaison avec les procédés de l'art antérieur utilisant uniquement un réacteur SBR à biomasse libre (de type conventionnel ou hybride), le procédé selon la présente invention a notamment les avantages suivants (cas notamment où les réacteurs SBR du système de réacteurs sont des réacteurs SBR à biomasse libre ou granulaire) :
- Il permet une meilleure nitrification car le réacteur MBBR est aéré en continu et comprend une biomasse nitrifiante dédiée sur biofilm. Ceci a pour conséquence que le cycle dans les réacteurs SBR sont plus courts, ce qui induit un gain de volume des installations correspondantes.
- Il permet de réduire l'âge de boue minimum de la biomasse libre. En effet, le système de réacteurs MBBR-SBR selon la présente invention comprend globalement moins de biomasse libre qu'un réacteur SBR à biomasse libre ou granulaire de l'art antérieur. De plus le réacteur MBBR permet de maintenir de bonnes performances de nitrification grâce à son biofilm nitrifiant. Ceci induit un gain de volume des installations correspondantes.
- Le biofilm nitrifiant du réacteur MBBR est plus robuste que la biomasse libre des réacteurs SBR à biomasse libre ou granulaire selon l'art antérieur et permet de mieux gérer les augmentations brusques de charge à nitrifier puisqu'il est quasi-exclusivement dédié à la nitrification. Ceci implique une meilleure robustesse et une meilleure gestion des pics de charge ammoniacale par les installations correspondantes.

En comparaison avec les procédés de l'art antérieur utilisant uniquement un réacteur IFAS-SBR, le procédé selon la présente invention a notamment les avantages suivants (cas notamment où les réacteurs SBR du système de réacteurs sont des réacteurs SBR à biomasse libre ou granulaire) :
- Le réacteur MBBR fonctionne en continu sans phase de décantation dans laquelle le média prend beaucoup de place et entraine une limite du volume d'eau pouvant être traitée. Ceci induit un gain de volume des installations correspondantes.
- Une installation peut être facilement réhabilitée par une modification simple de configuration entre réacteurs, les réacteurs SBR n'ayant pas besoin d'être vidés et immobilisés lors de la reconfiguration. Ceci implique donc que le procédé selon la présente invention peut être facilement mis en œuvre dans une installation existante.

En comparaison avec les procédés de l'art antérieur utilisant uniquement un réacteur SBMBBR, le procédé selon la présente invention a notamment les avantages suivants (cas où les réacteurs SBR du système de réacteurs sont des réacteurs de type SBMBBR) :
- La présence de support pour supporter la première biomasse permet de s'affranchir d'une étape de décantation des boues dans les réacteurs SBMBBR.
- La déphosphatation biologique (dans SBMBBR) et la nitrification (dans MBBR) sont découplées, permettant ainsi de supprimer la compétition entres les populations déphosphatante et nitrifiantes vis-à-vis du dioxygène. Ainsi la nitrification peut être mise en œuvre de façon plus efficace et s'achever plus rapidement, ce qui implique des cycles plus courts de fonctionnement pour les réacteurs SBMBBR et donc un gain en volume des installations correspondantes.
- par la même, les réacteurs SBMBBR ont des cycles plus courts, les charges organiques appliquées sont plus fortes, le biofilm est par conséquent plus épais , ce qui est favorable à l'obtention de zone anoxique dans le biofilm et donc à la dénitrification.
- La recirculation des ions nitrates produits dans le réacteur MBBR vers les réacteurs SBMBBR permet que la déphosphatation soit principalement réalisée par consommation d'ions nitrates par des micro-organismes DPAO présents dans les réacteurs SBMBBR plutôt que par une consommation de dioxygène par des micro-organismes PAO. Ceci implique une consommation moindre en dioxygène et donc un gain en énergie pour les installations correspondantes.

## Revendications

1. Procédé de traitement biologique du carbone, de l'azote et facultativement du phosphore des eaux, dans un système de réacteurs (1) comprenant au moins deux réacteurs séquentiels discontinus (SBR) (2) parallèles et un réacteur à film biologique à lit mobile (MBBR) (3), ledit procédé comprenant des étapes de :
- remplissage (10) d'un réacteur séquentiel discontinu (2) avec une eau à traiter (5) ;
- traitement biologique anoxique/aérobie (20) dans ledit système de réacteurs (1) de l'eau présente dans ledit réacteur séquentiel discontinu (2) ; et,
- évacuation (30) dudit réacteur séquentiel discontinu (2) d'une eau traitée (35) ;
ladite étape de traitement biologique anoxique/aérobie (20) dans ledit système de réacteurs (1) comprenant :
- un traitement biologique en conditions majoritairement anoxiques (210) par une première biomasse dans lesdits au moins deux réacteurs séquentiels discontinus (2), produisant un premier effluent (215), ladite première biomasse comprenant principalement des micro-organismes hétérotrophes à effet dénitrifiant ;
- un traitement biologique en conditions aérobies (220) par une seconde biomasse dans ledit réacteur à film biologique à lit mobile (3), produisant un second effluent (225), ladite seconde biomasse (5) comprenant un biofilm à effet majoritairement nitrifiant supporté sur média ; et
- une recirculation continue desdits premier et second effluents (215, 225) entre lesdits au moins deux réacteurs séquentiels discontinus (2) et ledit réacteur à film biologique à lit mobile (3),
ladite étape de traitement biologique anoxique/aérobie ayant lieu tour à tour entre ledit réacteur à film biologique à lit mobile (MBBR) (3) et chacun desdits au moins deux réacteurs séquentiels discontinus (SBR) (2) parallèles de manière séquentielle, permettant de faire fonctionner ledit réacteur à film biologique à lit mobile (MBBR) (3) globalement en continu et uniquement en aérobie.

2. Procédé selon la revendication 1, dans lequel ladite étape de remplissage (10) de chacun desdits au moins deux réacteurs séquentiels discontinus (2) est mise en œuvre en conditions anaérobies et/ou dans lequel ledit procédé comprend en outre une étape de traitement biologique en conditions anaérobies (18) dans lesdits au moins deux réacteurs séquentiels discontinus (2), ladite étape de traitement biologique en conditions anaérobies (18) étant mise en œuvre avant ladite étape de traitement biologique anoxique/aérobie (20).

3. Procédé selon la revendication 2, dans lequel ladite étape de remplissage (10) de chacun desdits au moins deux réacteurs séquentiels discontinus (2) a une durée comprise entre 10 minutes et 4 heures et/ou ladite étape de traitement biologique en conditions anaérobies (18) a une durée comprise entre 10 minutes et 3 heures.

4. Procédé selon l'une quelconque des revendications 2 ou 3, dans lequel ladite première biomasse comprend des micro-organismes dénitrifiants capables d'accumuler des polyphosphates (DPAO).

5. Procédé selon la revendication 1, dans lequel ladite étape de traitement biologique anoxique/aérobie (20) a une durée comprise entre 1 heure et 8 heures.

6. Procédé selon l'une quelconque des revendications précédentes, dans lequel ladite première biomasse est une biomasse libre ou granulaire ou un biofilm supporté sur média, de manière préférentielle un biofilm supporté sur média.

7. Procédé selon l'une quelconque des revendications précédentes, dans lequel la concentration en dioxygène dissout dans ledit second effluent est comprise entre 1 milligramme et 6 milligrammes par litre.

## Patentansprüche

1. Verfahren zur biologischen Behandlung von Kohlenstoff, Stickstoff und optional Phosphor in Wasser in einem Reaktorsystem (1), umfassend mindestens zwei parallele Sequencing-Batch-Reaktoren (SBR) (2) und einen Schwebebett-Biofilmreaktor (MBBR) (3), wobei das Verfahren die Schritte umfasst:
- Füllen (10) eines Sequencing-Batch-Reaktors (2) mit zu behandelndem Wasser (5);
- anoxisches/aerobes biologisches Behandeln (20) des in dem Sequencing-Batch-Reaktor (2) vorliegenden Wassers in dem Reaktorsystem (1); und,
- Ablassen (30) von behandeltem Wasser (35) aus dem Sequencing-Batch-Reaktor (2);
wobei der Schritt des anoxischen/aeroben biologischen Behandelns (20) in dem Reaktorsystem (1) umfasst:
- eine biologische Behandlung unter überwiegend anoxischen Bedingungen (210) durch eine erste Biomasse in den mindestens zwei Sequencing-Batch-Reaktoren (2), wodurch ein erster Ablauf (215) produziert wird, wobei die erste Biomasse hauptsächlich heterotrophe Mikroorganismen mit denitrierender Wirkung umfasst;
- eine biologische Behandlung unter aeroben Bedingungen (220) durch eine zweite Biomasse in dem Schwebebett-Biofilmreaktor (3), wodurch ein zweiter Ablauf (225) produziert wird, wobei die zweite Biomasse (5) einen Biofilm mit überwiegend nitrierender Wirkung umfasst, der auf Medien geträgert ist; und
- eine kontinuierliche Rezirkulation des ersten und des zweiten Ablaufs (215, 225) zwischen den mindestens zwei Sequencing-Batch-Reaktoren (2) und dem Schwebebett-Biofilmreaktor (3),
wobei der Schritt des anoxischen/aeroben biologischen Behandelns abwechselnd zwischen dem Schwebebett-Biofilmreaktor (MBBR) (3) und jedem der mindestens zwei parallelen Sequencing-Batch-Reaktoren (SBR) (2) auf sequentielle Weise erfolgt, was ermöglicht, den Schwebebett-Biofilmreaktor (MBBR) (3) allgemein kontinuierlich und einmalig aerob zu betreiben.

2. Verfahren nach Anspruch 1, wobei der Schritt des Füllens (10) jedes der mindestens zwei Sequencing-Batch-Reaktoren (2) unter anaeroben Bedingungen durchgeführt wird und/oder wobei das Verfahren weiterhin einen Schritt eines biologischen Behandelns unter anaeroben Bedingungen (18) in den mindestens zwei Sequencing-Batch-Reaktoren (2) umfasst, wobei der Schritt des biologischen Behandelns unter anaeroben Bedingungen (18) vor dem Schritt des anoxischen/aeroben biologischen Behandelns (20) durchgeführt wird.

3. Verfahren nach Anspruch 2, wobei der Schritt des Füllens (10) jedes der mindestens zwei Sequencing-Batch-Reaktoren (2) eine Dauer aufweist, die zwischen 10 Minuten und 4 Stunden liegt, und/oder der Schritt des biologischen Behandelns unter anaeroben Bedingungen (18) eine Dauer aufweist, die zwischen 10 Minuten und 3 Stunden liegt.

4. Verfahren nach einem der Ansprüche 2 oder 3, wobei die erste Biomasse denitrierende Mikroorganismen umfasst, die Polyphosphate (DPAO) ansammeln können.

5. Verfahren nach Anspruch 1, wobei der Schritt des anoxischen/aeroben biologischen Behandelns (20) eine Dauer aufweist, die zwischen 1 Stunde und 8 Stunden liegt.

6. Verfahren nach einem der vorhergehenden Ansprüche, wobei die erste Biomasse eine freie oder körnige Biomasse oder ein Biofilm, der auf Medien geträgert ist, vorzugsweise ein Biofilm, der auf Medien geträgert ist, ist.

7. Verfahren nach einem der vorhergehenden Ansprüche, wobei die Konzentration von Disauerstoff, der in dem zweiten Ablauf gelöst ist, zwischen 1 Milligramm und 6 Milligramm pro Liter liegt.

## Claims

1. Method for the biological treatment of carbon, nitrogen and, optionally, phosphorous in water, in a system of reactors (1) comprising at least two parallel sequencing batch reactors (SBR) (2) and one moving-bed biofilm reactor (MBBR) (3), **characterized in that** said method comprises steps of:
- filling (10) one sequencing batch reactor (2) with water to be treated (5);
- carrying out anoxic/aerobic biological treatment (20), in said system of reactors (1), of the water present in said sequencing batch reactor (2); and
- removing (30) treated water (35) from said sequencing batch reactor (2);
said step of anoxic/aerobic biological treatment (20) in said system of reactors (1) comprising:
- biological treatment under predominantly anoxic conditions (210) by a first biomass in said at least two sequencing batch reactors (2) producing a first effluent (215), said first biomass comprising mainly heterotrophic denitrifying microorganisms;
- a biological treatment under aerobic conditions (220) by a second biomass in said moving-bed biofilm reactor (3), producing a second effluent (225), said second biomass (5) comprising a biofilm with predominantly nitrifying biofilm carried on media; and
- a continuous recirculation of said first and second effluents (215, 225) between said at least two sequencing batch reactors (2) and said moving-bed biofilm reactor (3),
said step of anoxic/aerobic biological treatment taking place in turn between said moving-bed biofilm reactor (MBBR) (3) and each of said at least two sequencing batch reactors (SBR) (2) in parallel in a sequential manner, allowing said moving bed biofilm reactor (MBBR) (3) to be operated overall continuously and only aerobically.

2. Method according to claim 1, wherein said step for filling (10) each of said at least two sequencing batch reactor (2) is implemented under anaerobic conditions and/or wherein said method furthermore comprises a step of biological treatment under anaerobic conditions (18) in said at least two sequencing batch reactor (2), said step of biological treatment under anaerobic conditions (18) being implemented before said step of anoxic/aerobic biological treatment (20).

3. Method according to claim 2, wherein said step for filling (10) each of said at least two sequencing batch reactor (2) has a duration of 10 minutes to 4 hours and/or said step of biological treatment under anaerobic conditions (18) has a duration of 10 minutes to 3 hours.

4. Method according to any one of the claims 2 or 3 wherein said first biomass comprises denitrifying polyphosphate accumulative organisms (DPAO).

5. Method according to claim 1, wherein said step of anoxic/aerobic biological treatment (20) has a duration of 1 hour to 8 hours.

6. Method according to any one of the above claims, wherein said first biomass is a suspended or granular biomass or a biofilm carried on media, preferably a biofilm carried on media.

7. Method according to any one of the above claims, wherein the concentration in diatomic oxygen dissolved in said second effluent is from 1 milligram to 6 milligrams per liter.
